Europäisches Patentamt

(19) European Patent Office

Office européen des brevets

(11) Publication number : **0 543 634 A1**

(12) **EUROPEAN PATENT APPLICATION**

(21) Application number : **92310513.4**

(22) Date of filing : **18.11.92**

(51) Int. Cl.$^5$ : **C08J 7/18, B29C 59/14, B05D 3/14, B05D 1/18**

(30) Priority : **18.11.91 GB 9124467**

(43) Date of publication of application :
**26.05.93 Bulletin 93/21**

(84) Designated Contracting States :
**AT BE CH DE DK FR GB IT LI NL SE**

(71) Applicant : **PUBLIC HEALTH LABORATORY SERVICE BOARD**
**61 Colindale Avenue**
**London NW9 5EQ (GB)**

(72) Inventor : **Hayat, Umar**
**1 Sprinkfield Road**
**Birkby, Huddersfield HD2 2AY (GB)**

(74) Representative : **Cropp, John Anthony David**
**MATHYS & SQUIRE 10 Fleet Street**
**London, EC4Y 1AY (GB)**

(54) Improvements in coating processes.

(57)   A method of coating a plastics substrate in which the surface of the substrate is activated by exposure to a plasma of inert gas and water vapour to form hydroxyl groups on the surface. The substrate is subsequently exposed to polymerisable material which on polymerisation forms a polymer containing groups capable of reacting with the hydroxyl groups.

Figure 1

This invention relates to improvements in or relating to processes for coating plastics substrates involving the interaction between a plasma and the surface of the substrate to activate the substrate prior to depositing the coating.

The ability to firmly adhere coatings to plastics substrates is important in many fields. For example, a coating may be required to confer biocompatibility to a substrate, antireflection coatings may be required for substrates that are to be used in the optical field, films may be used for guiding light waves in integrated optical circuits and, in particular, a coating may be applied to improve the durability of the plastics substrate.

It is known to improve the durability of plastics substrates, particularly those for use in the optical field, by applying a film of plasma polymerised organosilane which is usually harder than conventional coating layers. However, it is difficult to obtain good adhesion between these hard coatings and a relatively soft plastics substrate. In addition, the action of the energetic plasma may cause the plastics substrate to be ablated.

In recent years, glow discharge polymerisation of various organosilanes has been used to deposit on to optical substrates coatings that are particularly resistant to environmental conditions. Such processes have yielded uniform coatings of up to $2\mu$m thick. Whilst the coatings are optically clear and somewhat abrasion resistant, they fail to show strong adherence to the plastics substrate when tested by the adhesive tape peel-off test. In addition, the level of adhesion of the coating to the substrate decreases with time.

US 4096315 discloses a method of depositing an abrasion resistant coating on to an optical plastics substrate in which the substrate is exposed to a plasma of hydrogen, oxygen, air or water vapour to form hydroxyl groups on the surface of the substrate. The substrate is then exposed to an organosilane monomer plasma and thereafter to a plasma of a noble gas, oxygen, nitrogen or air. The protective polymer film formed from the monomer by this treatment is tenaciously bonded to the plastics substrate by the hydroxyl groups and is crosslinked and stress relieved by the action of the plasma of noble gas, oxygen, nitrogen or air.

However, whilst coatings produced by this method exhibit improved adhesion, the coating may still not be sufficiently strongly adhered for some applications.

We have now found an alternative method of coating a plastics substrate which results in the coating being more firmly adhered than has been possible heretofore.

In accordance with the present invention, there is provided an improvement in the method of coating plastics substrates which involves activating the surface of the substrate by forming hydroxyl groups thereon and thereafter exposing the activated substrate to polymerisable material which on polymerisable forms a polymer containing groups capable of reacting with hydroxyl groups provided on said surface by said activation characterised in that the surface is activated by exposure to a plasma comprising water vapour and an inert gas, by which is meant a gas which is inert under the conditions employed. The gas is preferably an inert gas of Group VIII but other gases may also be used, e.g. halogenated hydrocarbons such as those known as Freons.

It is believed that the dilution of the water vapour with the inert gas reduces the risk of the hydroxyl groups of the plasma recombining with the protons in preference to attaching to the substrate surface. Such recombination not only reduces the density of hydroxyl groups on the substrate surface but also forms water molecules which will adversely effect the bonding of the coating material to the surface of the substrate.

Irrespective of the correctness of the foregoing hypothesis, it has been observed that the process of the present invention results in significantly increased bonding between the substrate and the coating as evidenced in the examples which follow.

The plastics substrates often have contaminants, which may include water, on the surface of the substrate. If these contaminants are not removed before the activation step the coating will not adhere to the substrate to a sufficient degree.

US 4096315 discloses a method of removing water soluble contaminants in which the plastics substrate is dipped into Freon solvent TWD 602. The substrate can then be degreased in Freon TF vapour.

In US 4091166 the plastics substrate is cleaned with Freon before being exposed to a plasma of boron trifluoride, a dehydrating gas.

These methods have the disadvantage that whilst the treatments are harsh, they are often insufficient to remove all of the contaminant and water and a post-treatment stage is often required, thereby increasing the cost of the process. In addition, dehydrating gases such as boron trifluoride are extremely corrosive and toxic and thus require specially skilled operators and special conditions.

Our process therefore preferably comprises a pre-treatment step in which the plastics substrate is blasted with an inert gas to remove contaminants. The inert gas is preferably nitrogen. The pre-treatment may additionally or alternatively comprise spraying the substrate with an organic solvent in an inert atmosphere. Suitable organic solvents include halogenated hydrocarbons such as Freons. Where the pre-treatment includes use of both an inert gas and an organic liquid, the use may occur simultaneously or sequentially.

While it is surmised that the process of the invention may be applied to any plastics substrate, it is particularly applicable to transparent plastics materials, especially plastics materials suitable for use in optical applications. Those that may be mentioned in particular include polyacrylics, polystyrene, polycarbonates and polyimides and especially polymethylmethacrylate (PMMA).

There is not believed to be any particular limitation on the nature of the coating material that may be employed provided that it comprises a monomer or mixture of monomers which on polymerisation provide a polymer which contains groups capable of reacting with hydroxyl groups formed on the surface of the substrate by the activation step. However, the process of the invention is particularly suitable for use with monomers containing silicon atoms and which yield abrasion resistant coatings; e.g. organosilanes.

One example of a suitable class of silanes comprises those containing polymerisable unsaturation and at least one group capable of reacting with an hydroxyl group. Examples include vinyltrimethoxysilane, vinyldimethylethoxysilane and dimethyldiethoxysilane.

This method may be used to coat the substrate with biocompatible or antireflection coatings or a coating that may be used for guiding light waves. Alternatively, the method may be used to deposit an intermediate layer which has functionality that enables a further coating such as a biocompatible coating to be deposited.

The plasmas used in the method of the present invention may be generated by direct current. However, they are preferably excited by an alternating current at from $10^3$ to $10^{12}$ Hz and more preferably by an alternating current at from $10^9$ Hz to $10^{12}$ Hz.

The invention also provides apparatus suitable for use in the process, said apparatus comprising a zone containing a plastics substrate and a plasma-forming zone, means for providing gas to the plasma-forming zone, electromagnetic coupling means for generating an ionising AC electric field in the plasma-forming zone to form plasma from the gas, and means for contacting the substrate with the plasma.

In one alternative, the plasma-forming zone and the zone containing the substrate may be the same zone. In an alternative embodiment, the plasma-forming zone and the substrate-containing zone are different and means are provided for transferring plasma formed in the first mentioned zone to the second.

The invention is now described in greater detail with reference to a preferred embodiment and with the aid of the accompanying drawings in which:

Figure 1 is a schematic drawing of one apparatus suitable for use in the invention; and

Figure 2 is a schematic diagram illustrating the adhesive tape test.

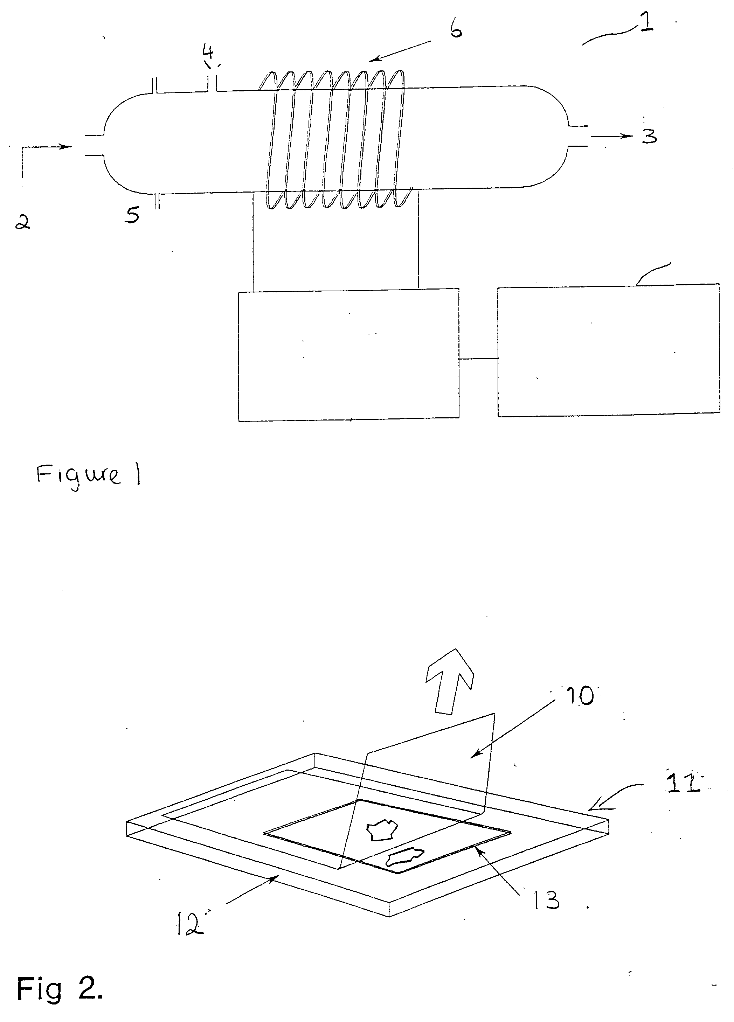

Referring to Figure 1, the apparatus comprises a vessel (1) having an inlet (2) through which gas may be introduced into the vessel and an outlet (3) connected to a pump, not shown. A further outlet (4) is connected to a Pirani gauge, not shown. A flange (5) allows the transfer of the substrate into and out of the vessel (1). A coil (6) is wound around the vessel (1) and connected to an alternating current source via a matching network. This network serves to match the external load to the output impedance of the generator, thus ensuring maximum power.

The pump is preferably a 100 litre min$^{-1}$ two-stage rotary pump. A liquid nitrogen trap, not shown, is preferably incorporated into the system to prevent back streaming of rotary pump oil and to assist in attaching a low pressure by condensing any vapour in the trap.

In an alternative embodiment, not shown, the coil (6) may be replaced by the plates of a capacitor which are situated on opposed sides of the vessel (1). It will be clear that different designs of inductively coupled coils or capacitatively coupled plates can be arranged to suit the reactor design in order to maximise the power transfer.

Before being loaded into the vessel (1), the substrate to be treated may be pre-treated with a nitrogen gas jet and an organic solvent spray. The organic solvent, which may be a halogenated hydrocarbon and is preferably a Freon, may cause the surface of the substrate to cool which will cause any water vapour in the atmosphere to condense thereon. This problem may be overcome by treating the substrate with the organic solvent under an inert atmosphere. The inert atmosphere may be nitrogen.

The substrate is preferably maintained in an inert atmosphere whilst it is introduced into the vessel (1). The substrate may be located within the field or outside the field, e.g. by providing the vessel in the form of a tubular reactor through which the gas is caused to pass from a plasma-forming zone to a downstream zone containing the substrate. In an alternative embodiment, not shown, the apparatus may consist of two vessels, the gas being excited to a plasma in the first vessel prior to being passed to the second vessel containing the substrate.

The surface is then exposed to a plasma of inert gas and water vapour which may be formed by bubbling the inert gas through ionised water at room temperature, thus saturating the inert gas with water vapour. The inert gas is preferably argon. Freon vapour may also be employed, however.

The plasma causes hydroxyl groups to be covalently attached to the surface of the substrate.

Controlling the ratio of water vapour to inert gas enables the density of functionality to be controlled. The inert gas and water vapour mixture is preferably at a pressure of from 0.05 to 0.15 mbar.

The plasma is excited by a radio frequency generator. It will be understood that in some countries the frequencies that may be used are limited, e.g. because of the risk of interference with radio transmissions. For example, in Great Britain, a frequency of 13.56 MHz is set aside by the Government for such experiments and will not therefore interfere with radio transmissions. Other frequencies can be used provided that the Government is advised of the intention to use these frequencies.

The vessel (1) is then evacuated prior to the coating step. The monomer from which the coating is to be formed is then introduced into the vessel (1).

Prior to its introduction, the monomer may be purified by vacuum distillation and subsequently degassed on a grease-free vacuum line by alternate freeze/thaw cycles.

The monomer is then exposed to an RF frequency to excite it to a plasma which initiates the polymerisation reaction and causes the resultant polymer layer to be adhered to the substrate by reaction with the hydroxyl groups.

The energy input per unit mass of monomer is a significant parameter in determining the properties of the resultant coating layer. In general, a highly cross-linked polymeric layer, that is one that is dense and brittle, is obtained when equation E1 is satisfied.

$$\frac{W}{FM} = 10^9 \text{ to } 10^{11} \text{ J/kg} \quad (E1)$$

A less dense coating is obtained when the equation E2 is satisfied.

$$\frac{W}{FM} = 10^7 \text{ to } 10^8 \text{ J/kg} \quad (E2)$$

Where W = power input (watts), F = flow rate of monomer (moles per second) and M = molecular weight of monomer (kg).

The flow rate of the monomer is preferably from 0.7 to 2.0 $cm^3$ $min^{-1}$

It is possible to ascertain whether the power loading is too high since this generally results in the polymeric film being coloured and weakly adhered to the substrate.

Satisfactory coatings are generally achieved at power loadings of from 20 to 60 watts.

By way of example, for vinyltrimethoxysilane at F. 1.0 $cm^3$ $min^{-1}$ and W/FM = 3 x $10^8$ J/kg, the power input is approximately 30 watts and a fairly dense, well adhered and abrasion resistant film having a thickness of about 0.5 $\mu$m may be obtained in about 40 minutes.

The coated substrate may be subjected to a post-treatment step in which the polymer coated plastic substrate is subjected to a plasma of an inert gas at higher power loadings than those used in the coating step to further crosslink the interface between the substrate and the coating. The inert gas is preferably argon. The atmosphere over the coated substrate is preferably evacuated between the coating step and the post-treatment, e.g. to about $10^{-4}$ mbar.

The invention will now be illustrated with reference to specific examples. However, it is to be understood that the invention is not limited by these examples.

## Example 1

25mm x 25mm x 2.5mm pieces of polymethylmethacrylate (PMMA) as substrate were heavily contaminated with dust and particles that were known to disadvantage the plasma deposition of a strongly adhered abrasion resistant film. The substrates were then placed under a nitrogen atmosphere and subjected to a nitrogen gas jet and sprayed with liquid Freon.

The substrates were then maintained under a nitrogen atmosphere whilst being transferred to the reaction vessel of the apparatus illustrated in Figure 1.

The substrates were subjected to the surface activation step. Each substrate was subjected to a plasma of a different activation gas at a power loading of from 10 to 40 watts for from 30 to 300 seconds at a pressure of 0.15 mbar.

The vessels were then evacuated to $10^{-4}$ mbar prior to exposing the activated substrates to a plasma of vinyltrimethoxysilane at a pressure of 0.15 mbar for 40 minutes at a monomer flow rate of 1.0 $cm^3$ $min^{-1}$ and polymerisation power of 30 watts.

The adhesion of the resulting polyvinyltrimethoxysilane coating was tested using the adhesive tape test. In this case, the coating was tested with fresh Scotch (TM) tape provided by 3M Industrial Products Limited.

The tape test is shown schematically in Figure 2. The tape (10) is adhered to the coated film (11) and then peeled off perpendicular to the substrate. The substrate (12) and the tape (10) are then inspected visually to ascertain whether the film (13) has adhered to the substrate (12) or has been removed on the tape (10).

The test is essentially a qualitative test which measures either success or failure. If the tape is applied under a set load and removed in a reproducible manner, than semi quantitative results may be obtained based on the energy required to remove the tape as the percentage of the coated film removed.

The durability, or abrasion resistance, of the coated substrate was tested with a rubber eraser substantially in the manner prescribed by military specification MIL-E-12397B. The abraded surface was then inspected visually for damage.

The results obtained for the various activation gases are set out in Table 1.

TABLE 1

| Surface Activation Gas | Power watts | Duration sec | Remarks |
|---|---|---|---|
| Helium | 10-40 | 30-300 | Sporadic improvement in adhesion. Good durability |
| Argon | 10-40 | 30-300 | Sporadic improvement in adhesion. Good durability |
| Water | 10-40 | 30-300 | Poor adhesion. Good durability. |
| Air | 10-40 | 30-300 | Poor adhesion. Good durability. |
| Argon and water vapour | 10-100 | 30-300 | Very good adhesion. Good durability. |

## Example 2

Substrates of polymethylmethacrylate were prepared and treated with a plasma of argon and water vapour as in Example 1 before being exposed to a monomer of vinyltrimethoxysilane at a power of 30 watts for 40 minutes at a pressure of 0.15 mbar and $F = 1.0$ cm$^3$ min$^{-1}$.

The coated substrate was then exposed to a plasma of an inert gas as a post-treatment step.

The resulting coated substrates were tested for adhesion and abrasion resistance as described in Example 1.

The effect of the post-treatment gases are shown in Table 3.

TABLE 2

| Post-Treatment Gas | Power watts | Duration sec | Remarks |
|---|---|---|---|
| Argon | 10-100 | 60-600 | Films show good adhesion and abrasion resistance. |
| Helium | 10-100 | 60-600 | Films show good adhesion and abrasion resistance. |

It is clear from the data set out above that the surface activation of the substrate is of paramount importance if good adhesion and abrasion resistance of the film is to be obtained. For comparision, where the substrate was treated with a vinyltrimethoxysilane silane at a power of 20-60 watts without prior activation, only sporadic adhesion of the coating was achieved.

The surface coatings deposited in this manner consistently passed the adhesion and abrasive resistance test with not even small fragments of coating being adhered to the tape.

## Example 3

The coated samples having been pretreated with argon/water vapour obtained in Example 1 were treated in boiling water for 10 minutes to simulate extreme conditions. The samples were again subjected to the adhesive tape test. Very good adhesion characteristics were obtained with no "sputtering" effect being observed.

Coatings of polyvinyltrimethoxysilane formed on PMMA substrates in accordance with the present invention were found to be uniform and optically clear.

## Claims

1. A method of coating a plastics substrate comprising activating the surface of the substrate by forming hydroxyl groups thereon and thereafter exposing the activated substrate to polymerisable material which on polymerisation forms a polymer containing groups capable of reacting with hydroxyl groups provided on said surface by said activation characterised in that the surface is activated by exposure to a plasma of inert gas and water vapour.

2. A method according to claim 1 characterised in that the inert gas is argon.

3. A method according to claim 1 or 2 characterised in that the substrate is treated with an inert gas, an organic solvent or an inert gas and an organic solvent to remove contaminants prior to being exposed to the activation step.

4. A method according to claim 3 characterised in that the inert gas is nitrogen.

5. A method according to any one of claims 1 to 4 characterised in that the plastic substrate is polyacrylic, polycarbonate or polyamide.

6. A method according to claim 5 wherein the polyacrylic is polymethylmethacrylate.

7. A method according to any one of claims 1 to 6 characterised in that the polymerisable material is vinyltrimethylsilane, vinyltrimethoxysilane, hexamethylisilane, vinyldimethylethoxysilane or dimethylethoxysilane.

8. A method according to any one of claims 1 or 7 characterised in that the coated substrate is subjected to a plasma of inert gas.

9. A method according to claim 8 characterised in that said inert gas is argon.

10. A method according to any one of claims 1 to 9 characterised in that the plasmas are generated by an alternating current at $10^9$ Hz to $10^{12}$ Hz.

Figure 1

Fig 2.

**European Patent Office**

# EUROPEAN SEARCH REPORT

Application Number

EP 92 31 0513

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 131 691 (MORLEY J. R. ET AL)<br>* claim 1 *<br>* column 4, line 38 - line 43 *<br>* example 1 * | 1,2,5 | C08J7/18<br>B29C59/14<br>B05D3/14<br>B05D1/18 |
| Y | DATABASE WPIL<br>Derwent Publications Ltd., London, GB;<br>AN 90055145[08]<br>& JP-A-2 009 017 (TDK CORP.) 12 January 1990<br>* abstract * | 1-3,5-9 | |
| D,Y | US-A-4 096 315 (KUBACKI R. M.)<br>* claims 1,2,4,5,14-16 * | 1-3,5-9 | |
| A | US-A-5 041 303 (WERTHEIMER M. R. ET AL)<br>* claims 1,4,12,18,22 *<br>* table 3 * | 1,5,7,10 | |
| A | US-A-4 649 071 (TAJIMA I. ET AL)<br>* claims 1,13,14,21,23,25-27 *<br>* column 5, line 63 - column 6, line 4 * | 1,2,5-7 | TECHNICAL FIELDS SEARCHED (Int. Cl.5 )<br><br>C08J<br>B29C<br>C23C<br>B05D |

The present search report has been drawn up for all claims

| Place of search | Date of completion of the search | Examiner |
|---|---|---|
| THE HAGUE | 03 FEBRUARY 1993 | NIAOUNAKIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P0401)